# EUROPEAN PATENT APPLICATION

(11) **EP 2 565 477 A1**
(43) Date of publication of application: **06.03.2013**
(21) Application number: 11179873.2
(22) Date of filing: 02.09.2011
(51) Int. Cl.: F16C 33/66, F16N 31/02

(54) **Bearing system for a wind turbine comprising a rotatable scraper and a stationary scraper**

(71) Applicant: SIEMENS AKTIENGESELLSCHAFT, 80333 München (DE)
(72) Inventor: Valbjoern, Jesper, 6000 Kolding (DK)

(57) **Abstract**

The present invention relates to a bearing system (100) for a wind turbine. The bearing system (100) comprises a stationary ring (110) which comprises a first axial front surface (111), a rotatable ring (120) to which a hub of the wind turbine is mountable, a rotatable scraper (130) which is fixed to the rotatable ring (120) and a stationary scraper (140). The stationary ring (110) supports the rotatable ring (120), such that the rotatable ring (120) is rotatable around the stationary ring (110). The rotatable scraper (130) abuts against the first axial front surface (111) such that by rotation of the rotatable ring (120) the rotatable scraper (130) sweeps along the first axial front surface (111) for scraping off a grease from the first axial front surface (111) of the stationary ring. The stationary scraper (140) and the rotatable scraper (130) are arranged with respect to each other in such a way that, if the rotatable ring (120) rotates, the rotatable scraper (130) passes the stationary scraper (140) once per revolution of the rotatable ring (120) with respect to the stationary ring (110) such that the stationary scraper (140) scrapes off the grease from the rotatable scraper (130).

## Description

### Field of invention

The present invention relates to a bearing system for a wind turbine and to a method for scraping off grease in a bearing system for a wind turbine.

### Art Background

Wind turbine blades of wind turbines are mounted generally to a central hub. The central hub is rotatably coupled to a generator in a nacelle of a wind turbine. A main bearing is interposed between the generator and the hub, which main bearing is adapted for transferring the high loads from the wind turbine blades e.g. to the tower or the nacelle of the turbine. By the installation of the main bearing, a load relieving of the generator is thereby achieved.

Generally, the main bearing comprises a rotatable ring to which the hub of the wind turbine is mounted and a stationary support ring which rotatable supports the rotatable ring. Grease is applied between the stationary ring and the rotatable ring in order to grease the respective contact surfaces of the stationary ring and the rotatable ring.

The sealing and the leakage of the main bearing is controlled by e.g. a rubber lip seal. Due to the high loads and due to the deflection of the bearing parts, excess grease is leaking and contaminating the surroundings of the bearing. In particular, the excess grease contaminates the generator and the generator windings which has a negative effect on the function of the generator. In conventional wind turbine bearings, the excess grease has to be removed e.g. manually.

### Summary of the Invention

It may be an objective of the present invention to provide a bearing for a wind turbine, which comprises a proper handling of excess grease of the bearing.

This object may be solved by a bearing system for a wind turbine and by a method for scraping off grease in a bearing system for a wind turbine according to the independent claims.

According to a first aspect of the present invention, a bearing system for a wind turbine is presented. A bearing system comprises a stationary ring, which comprises a first axial front surface, and a rotatable ring to which a hub of the wind turbine is mountable. The stationary ring supports (e.g. by enveloping) the rotatable ring such that the rotatable ring is rotatable with respect to the stationary ring and is thus rotatable with respect to the stationary ring.

Furthermore, the bearing system comprises a rotatable scraper and a stationary scraper. The rotatable scraper is fixed to the rotatable ring. The rotatable scraper abuts against the first axial front surface such that by rotation of the rotatable ring the rotatable scraper sweeps along the first axial surface for scraping off a grease from the first axial front surface of the stationary ring.

The stationary scraper and the rotatable scraper are arranged with respect to each other in such a way that, if the rotatable ring rotates, the rotatable scraper passes the stationary scraper once per revolution of the rotatable ring with respect to the stationary ring such that the stationary scraper scrapes off the grease from the rotatable scraper.

According to a further aspect of the present invention, a method for scraping off grease in a bearing system for a wind turbine is presented. The bearing system comprises a stationary ring, which comprises a first axial front surface, and a rotatable ring, to which a hub of the wind turbine is mountable. The stationary ring supports the rotatable ring. The rotatable ring envelops the stationary ring such that the rotatable ring is rotatable around the stationary ring or vice versa. Furthermore, the bearing system comprises a rotatable scraper and a stationary scraper. The rotatable scraper is fixed to the rotatable ring, wherein the rotatable scraper abuts against the first axial front surface such that by rotation of the rotatable ring the rotatable scraper sweeps along the first axial front surface for scraping off the grease from the first axial front surface of the stationary ring. According to the method, grease is scraped off from the rotatable scraper by the stationary scraper by situating the stationary scraper and the rotatable scraper with respect to each other in such a way that the rotatable scraper passes the stationary scraper once per revolution of the rotatable ring with respect to the stationary ring.

The term "stationary ring" denotes a bearing part of the bearing system, which comprises an annular shape. The stationary ring comprises a center point through which a rotary axis of the rotatable ring runs. Along the rotary axis an axial direction is defined. The stationary ring is fixed for example to a housing of the bearing system, to a nacelle of the wind turbine and/or to the tower of the wind turbine. In particular, the stationary ring forms a force-transmitting coupling with supporting parts of the wind turbine, such as the nacelle or the wind turbine tower, wherein the stationary ring does not have a force transmitting coupling to in particular the generator of the wind turbine.

The term "rotatable ring" denotes an annular ring element which is supported by the stationary ring, such that the loads acting on the rotatable ring, e.g. the weight forces of the wind turbine blades and for example the wind loads acting on the wind turbine blades, are transferred to the stationary ring. The rotatable ring extends along the axial direction and comprises the rotary axis, which runs through the center point of the stationary ring. The rotatable ring may be mounted over the stationary ring and houses the stationary ring, such that the rotatable ring surrounds the stationary ring and is e.g. in sliding contact with and rotatable around the stationary ring. Hence, the rotatable ring may rotate around the rotary axis, wherein the stationary ring rests without any movement in the nacelle of the wind turbine. In such an exemplary embodiment, the stationary ring comprises a radially outer surface and the rotatable ring comprises a radially inner surface, wherein the radially outer surface and the radially inner surface contact each other. Between the contact surfaces of the stationary ring and the rotatable ring, a grease for greasing the contact surfaces is provided. Alternatively, the rotatable ring is mounted inside the stationary ring and is enveloped by the stationary ring, such that the stationary ring surrounds the rotatable ring. Hence, the rotatable ring envelops in a preferred embodiment the stationary ring such that the rotatable ring is in sliding contact with the stationary ring. In alternative embodiments, the rotatable ring is enveloped by the stationary ring, such that the rotatable ring is in sliding contact with the stationary ring. In other words, the rotatable ring may be with respect to the stationary ring either an inner or an outer ring and the stationary ring may be an outer or an inner ring, respectively.

Furthermore, a ball and roller bearing device may be interposed between the rotatable ring and the stationary ring such that the friction between the rotatable ring and the stationary ring may be reduced. Also the ball and roller bearing has to be greased in order to reduce friction and wear, such that excess grease exits a split between the rotatable ring and the stationary ring.

The first axial front surface of the stationary ring defines the surface of the stationary ring, wherein a normal of the surface points in the axial direction. The first axial front surface is not directed and not in contact with the rotatable ring. In particular, the first axial surface may run within a plane which has the normal that is parallel with the axial direction.

The rotatable ring may be coupled to a rotor of the generator of the wind turbine, such that the torque derived from the hub is transmitted by the rotatable ring to the rotor of the generator.

The rotatable scraper is fixed to the rotatable ring. The rotatable scraper thereby moves together with the rotatable ring. The rotatable scraper abuts against the first axial front surface, such that by rotation of the rotatable ring, the rotatable scraper sweeps along the first axial front surface for scraping off a grease from the first axial front surface of the stationary ring. Between the rotatable ring and the stationary ring a leakage of grease occurs, wherein the leaked grease runs along the first axial front surface. This leaking grease is scraped off by the rotatable scraper, when sweeping along the first axial front surface. The rotatable scraper may therefore comprise for example a plate made of a softer material than the material of the stationary ring, wherein the rotatable scraper comprises an edge with which the rotatable scraper abuts against the first axial front surface of the stationary ring.

The rotatable scraper may only abut against the first axial front surface. The rotatable scraper may additionally abut against a section of the first axial front surface and for example a section of a second axial front surface of the rotatable scraper. Hence, the rotatable scraper abuts with its edge or lip over the split between the stationary ring and the rotatable ring.

The term "stationary scraper" denotes a scraper, which scrapes off scraped off grease from a portion or a section of the rotatable scraper. The stationary scraper is fixed to a stationary part of the wind turbine and/or the bearing system and does not move together with the rotatable scraper with respect to the stationary ring. For example, the stationary scraper may be fixed to a housing and/or to a nacelle of the wind turbine or for example to the stationary ring. The stationary scraper is arranged in such a way that, if the rotatable ring rotates, the rotatable scraper passes the stationary scraper once per revolution of the rotatable ring such that the stationary scraper scrapes off the grease from the rotatable scraper.

Hence, the grease from the rotatable scraper is taken away by the stationary scraper, such that further grease may be scraped off by the rotatable scraper. In other words, the grease may be removed from the first axial front surface and from the rotatable scraper in a controlled manner.

In a further exemplary embodiment, a plurality of rotatable scrapers are mounted to the rotatable ring in such a way that, if the rotatable ring rotates, each of the plurality of rotatable scrapers passes the stationary scraper once per revolution of the rotatable ring such that the stationary scraper scrapes off the grease from the respective rotatable scraper. Additionally or alternatively, a plurality of stationary scrapers may be mounted to the stationary ring, wherein each of the plurality of stationary rings is spaced from each other along a circumferential direction.

In operation, the rotatable scraper will sweep along a circumferential direction the first axial front surface of the stationary (inner) ring and will collect an excess grease built-up which has leaked from the main bearing, in particular which has leaked from a split between the stationary ring and the rotatable ring. Once per revolution the rotatable scraper will pass the fixed stationary scraper which will collect the scraped off grease which has been picked-up by the rotatable scraper. The grease collected by the fixed stationary scraper may be conveyed away in a controlled manner, such that the grease may be collected by the stationary scraper and will drop down from the stationary scraper into e.g. a grease vessel or tray which will have to be emptied as a part of regular service, for instance.

Hence, by providing a bearing system with an above described double scraper system, respectively with a fixed stationary scraper and a rotatable scraper, grease leakage along an entire first axial front surface of the stationary ring may be scraped off and the excess scraped-off grease is guidable away, e.g. into a grease vessel, in a controlled manner. Hence, by a controlled collecting of excess grease, the risk that functional elements, such as generator windings or other electrical components, are contaminated with excess grease is reduced. Moreover, due to the controlled removal of the scraped off excess grease, the excess grease is collectable within trays, such as a grease vessel, such that until the grease vessel is not full, further maintenance time for cleaning the bearing system from exceeded grease is obsolete.

According to a further exemplary embodiment, the bearing system comprises a housing, wherein the stationary scraper and the stationary ring are mounted to the bearing housing.

According to a further exemplary embodiment, the bearing system comprises a grease vessel, wherein the stationary scraper is coupled to the grease vessel such that the scraped off grease from the rotatable scraper is flowable along the stationary scraper into the grease vessel. For example, the stationary scraper may comprise a conducting part, such as a grease channel within which the scraped off grease may flow between the location, where the stationary scraper scrapes off the grease from the rotatable scraper, and the grease vessel.

A lubricating system of the bearing system may be coupled to the grease vessel, such that the collected excess grease from the stationary scraper may be pumped again from the grease vessel into the bearing system for greasing the required parts of the bearing system. Hence, a circulation of the grease is provided such that the bearing and in particular the lubricating system of the bearing system is more efficient.

According to further exemplary embodiment, the rotatable ring comprises a support ring which is mounted to a second axial front surface of the rotatable ring. The rotatable scraper is mounted to the support ring. In particular, the rotatable scraper is mounted to the support ring by welding. Hence, it is not necessary to weld the rotatable ring to the part of the rotatable ring, which is inside in contact with the stationary ring. The second axial front surface may be located in a further plane which further normal is parallel to the normal of the plane in which the first axial front surface is located, wherein the further plane is spaced along the axial direction from the plane. Alternatively, the second axial front surface may be located in the same plane as the first axial front surface.

According to a further exemplary embodiment, the rotatable scraper comprises a scraping section which sweeps along the first axial front surface for scraping off the grease from the first axial front surface of the stationary ring. The rotatable scraper comprises a gathering section with a gathering surface onto which the scraped off grease is gathered. The stationary scraper and the rotatable scraper are arranged with respect to each other in such a way that the stationary scraper scrapes off the scraped off grease from the gathering surface. The gathering surface may be spaced from the scraping section such that it may be prevented that the collected scraped off grease flows back to the first axial front surface.

In a further exemplary embodiment, the rotatable scraper comprises a connection section which connects the scraping section with the gathering section, such that the scraped off grease is guidable from the scraping section to the gathering surface along the connecting section. In particular, the gathering section is spaced from the scraping section along the axial direction. Hence, the gathering section is spaced apart from the first axial front surface such that a back flow of the scraped off grease is prevented.

According to a further exemplary embodiment, the scraping section comprises a (seal) lip, such as a rubber lip, which sweeps along the first axial front surface for scraping off the grease from the axial front surface of the stationary ring, if the rotatable ring rotates.

According to a further exemplary embodiment, the stationary scraper comprises a further (seal) lip, such as a rubber lip, for scraping off grease from the rotatable scraper, if the rotatable ring rotates.

The seal lip and/or the further seal lip may be detachably mounted to the scraping section and the stationary scraper, respectively. The seal lip and the further seal lip may be made of a soft metal, such as aluminum, or of other non-metallic materials, such as rubber, for example.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a front view of a section of a bearing system according to an exemplary embodiment of the present invention; and
Fig. 2 shows an enlarged view of the bearing system shown in Fig. 1, wherein a rotatable scraper and a stationary scraper are shown in more detail.

### Detailed Description

The illustrations in the drawings are schematically. It is noted that in different figures, similar or identical elements are provided with the same reference signs.

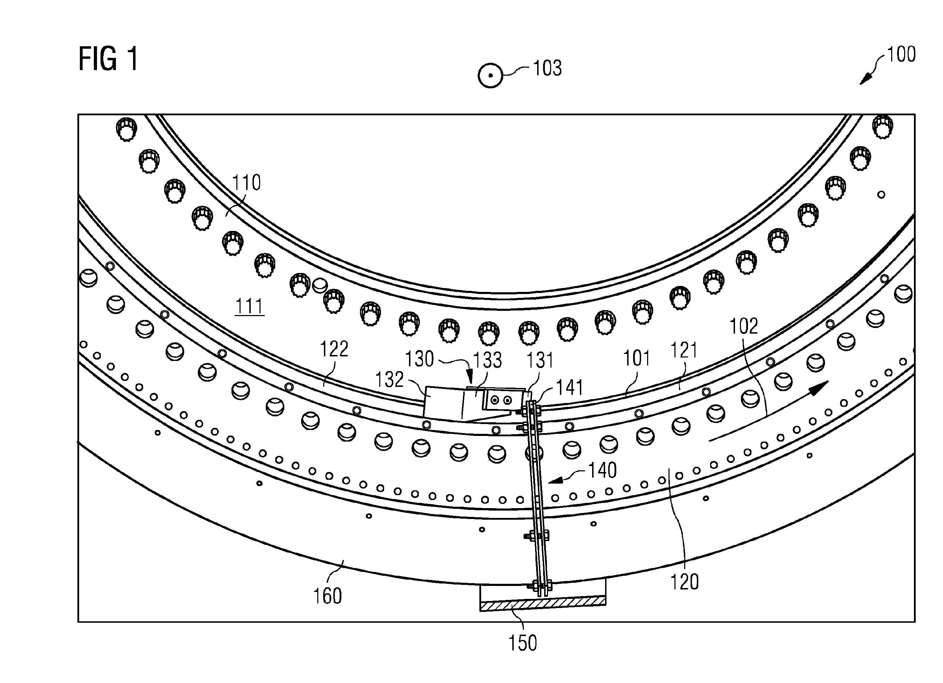

Fig. 1 shows a bearing system 100 for a wind turbine. The bearing system 100 comprises a stationary ring 110, which comprises a first axial front surface 111. The bearing system 100 further comprises a rotatable ring 120, to which a hub (not shown) of the wind turbine is mountable. The stationary ring 110 supports the rotatable ring 120. The rotatable ring 120 envelops the stationary ring 110 such that the rotatable ring 120 is in sliding contact (e.g. by a sliding bearing or a ball and roller bearing) with the stationary ring 110. To the rotatable ring 120 a rotatable scraper 130 is fixed, wherein the rotatable scraper 130 abuts against the first axial front surface 111 such that by rotation of the rotatable ring 120 the rotatable scraper 130 sweeps along the first axial front surface 111 for scraping off a grease from the first axial front surface 111 and of the stationary ring 110. A stationary scraper 140 which is fixed for example to a housing 160 is situated with respect to the rotatable scraper 130 in such a way, that, if the rotatable ring 120 rotates, the rotatable scraper 130 passes the stationary scraper 140 once per revolution of the rotatable ring 120 with respect to the stationary ring 110 such that the stationary scraper 140 scrapes off the grease from the rotatable scraper 130.

In Fig. 1, the rotary axis 103 is shown. Around the rotary axis 103 the rotatable ring 120 rotates e.g. with the shown direction of rotation 102 around the stationary ring 110. The stationary ring 110 and the rotatable ring 120 may comprise a common center point through which the rotary axis 103 runs. The rotary axis 103 defines an axial direction. A radial direction may be defined by a direction from a point on the stationary ring 110 and/or the rotational ring 120 to the rotary axis 103, wherein the radial direction is orthogonal to the axial direction.

In the exemplary embodiment shown in Fig. 1, the stationary ring 110 is located inside the rotating outer ring 120, wherein the rotating outer ring 120 envelops and surrounds the stationary inner ring 110. To the rotatable ring 120 a hub of the wind turbine is mountable. The radially inner surface of the rotatable ring 120 is in sliding contact with a radially outer surface of the stationary ring 110. Between the radially outer surface and the radially inner surface, a split 101 may exist, through which grease may exceed from an inner greasing system outside of the bearing system 100. The sliding contact between the stationary ring 110 and the rotatable ring 120 may as well be provided by a ball and roller bearing, which may be installed between the stationary ring 110 and the rotatable ring 120.

The stationary ring 110 may be supported by a support structure which is fixed to the housing 160 of the bearing system 100 or directly to the nacelle or a tower of the wind turbine.

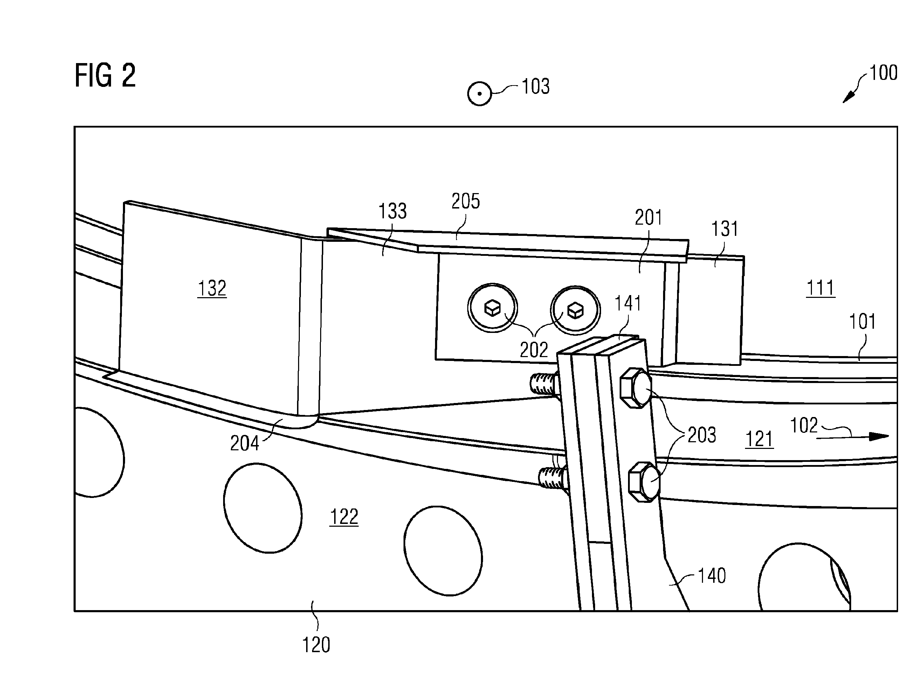

In Fig. 1, the rotatable scraper 130 is shown, wherein the rotatable scraper 130 comprises a scraping section 201 (shown in Fig. 2) with a seal lip 131, a gathering section 132 and a connection section 133. A seal lip 131 abuts onto the first axial front surface 111 of the stationary ring 110. Moreover, the seal lip 131 may also abut onto a section of a second axial front surface 121 of the rotatable ring 120. In this case, the seal lip 131 covers in other words the split 101, so that grease running from the split 101 along the first axial front surface 111 and the second axial front surface 121 is scraped off. The rotatable scraper 130 may contact for example by a gathering section 132 directly the rotatable ring 120 or a support ring 122, which is attached to the rotatable ring 120. The rotatable scraper 130 may be screwed to the support ring 122 or may be welded to the support ring 122.

The gathering section 132 comprises a gathering surface. The rotatable scraper 130 and the stationary scraper 140 are arranged with respect to each other in such a way that, if the rotatable ring 120 rotates, the rotatable scraper 130 passes the gathering surface of the stationary scraper 140 once per revolution of the rotatable ring 120 such that the stationary scraper 140 scrapes off the grease from the gathering section 132 respectively from the gathering surface of the rotatable scraper 130.

The gathering section 132 may be axially spaced from the seal lip 131 along the axial direction. The seal lip 131 and the gathering section 132 are connected by the connecting section 133. Scraped off grease which is scraped off by the seal lip 131 is guided along the connecting section 133 to the gathering section 132, as indicated by the arrow in Fig. 1. The stationary scraper 140 may be fixed to the stationary ring 110 or to the housing 160, for example. The stationary scraper 140 comprises a further seal lip 141 for scraping off grease from the rotatable scraper 130 and in particular from the gathering section 132, if the rotatable ring 120 rotates.

The stationary scraper 140 may comprise a channel through which the scraped off grease may be guided to a preferred destination, such as a grease vessel 150. In particular, the channel of the stationary scraper 140 may be aligned in such a way that the scraped off grease flows by the force of gravity along the channel to the grease vessel 150. With other words, the grease 150 may be located below the further seal lip 141 of the stationary scraper 140.

Fig. 2 illustrates a more detailed view of the rotatable scraper 130 and the stationary scraper 140. In particular, the rotatable scraper 130 which is fixed to the support ring 122 is shown in more detail. The scraping section 201 comprises the seal lip 131 which abuts onto the first front surface 111 of the stationary ring 110 for scraping off grease. In particular, as shown in Fig. 2, the seal lip 131 covers as well the split 101 between the stationary ring 110 and the rotatable ring 120 in order to assure a proper scraping off of exceeded grease. The seal lip 131 may be changeably mounted by fixing elements 202 to the scraping section 201. The scraped off grease may be guided from the seal lip 131 to the gathering section 132, which may comprise the gathering surface. The gathering section 132 is spaced along an axial direction with respect to the sealing lip 131. Along the connecting section 131 the scraped off grease is guided to the gathering section 132. In order to assure that the scraped off grease is prevented from leaving the connecting section 133 and flowing back to the first axial front surface 111, grease guiding deflectors 205 may be attached to the connecting section. In other words, a channel for the scraped off grease may be formed along the connecting section 133.

In the exemplary embodiment shown in Fig. 2, the rotatable scraper 130 is fixed with its gathering section 132 to the support ring 122 by welding as indicated by the weld joint 204.

As shown in Fig. 2, the further seal lip 141 of the stationary scraper 140 is exchangeably mounted by the further fixing element 203. As can be taken from Fig. 2, if the rotatable ring 120 rotates further along the direction of rotation 102, the further seal lip 141 scrapes off grease from the gathering surface of the gathering section 132 of the rotatable scraper 130. Along a further connecting section comprising for example a channel, the grease may be guided from the further seal lip 141 to e.g. a grease vessel 150.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Bearing system (100) for a wind turbine, the bearing system (100) comprising
a stationary ring (110) which comprises a first axial front surface (111),
a rotatable ring (120) to which a hub of the wind turbine is mountable,
wherein the stationary ring (110) supports the rotatable ring (120) such that the rotatable ring (120) is rotatable with respect the stationary ring (110),
a rotatable scraper (130) which is fixed to the rotatable ring (120),
wherein the rotatable scraper (130) abuts against the first axial front surface (111) such that by rotation of the rotatable ring (120) the rotatable scraper (130) sweeps along the first axial front surface (111) for scraping off a grease from the first axial front surface (111) of the stationary ring, and
a stationary scraper (140),
wherein the stationary scraper (140) and the rotatable scraper (130) are arranged with respect to each other in such a way that, if the rotatable ring (120) rotates, the rotatable scraper (130) passes the stationary scraper (140) once per revolution of the rotatable ring (120) with respect to the stationary ring (110) such that the stationary scraper (140) scrapes off the grease from the rotatable scraper (130).

2. Bearing system (100) according to claim 1, further comprising
a housing (160),
wherein the stationary ring (110) and the stationary scraper (140) are mounted to the housing (160).

3. Bearing system (100) according to claim 1 or 2, further comprising
a grease vessel (150),
wherein the stationary scraper (140) is coupled to the grease vessel (150) such that the scraped off grease from the rotatable scraper (130) is flowable along the stationary scraper (140) to the grease vessel (150).

4. Bearing system (100) according to one of the claims 1 to 3,
wherein the rotatable ring (120) comprises a support ring (122) which is mounted to a second axial front surface (121) of the rotatable ring (120),
wherein the rotatable scraper (130) is mounted to the support ring (122).

5. Bearing system (100) according to claim 4,
wherein the rotatable scraper (130) is mounted to the support ring (122) by welding.

6. Bearing system (100) according to one of the claims 1 to 5,
wherein the rotatable scraper (130) comprises a scraping section (201) which sweeps along the first axial front surface (111) for scraping off the grease from the first axial front surface (111) of the stationary ring (110),
wherein the rotatable scraper (130) comprises a gathering section (132) onto which the scraped off grease is gathered,
wherein the stationary scraper (140) and the rotatable scraper (130) are arranged with respect to each other in such a way that the stationary scraper (140) scrapes off the scraped off grease from the gathering section (132).

7. Bearing system (100) according to claim 6,
wherein the rotatable scraper (130) comprises a connecting section (133) which connects the scraping section (201) with the gathering section (132) such that the scraped off grease is guidable from the scraping section (201) to the gathering section (132) along the connecting section (133), and
wherein the gathering section (132) is spaced from the scraping section (201) along an axial direction.

8. Bearing system (100) according to claim 6 or 7,
wherein the scraping section (201) comprises a seal lip (131) for sweeping along the first axial front surface (111) for scraping off the grease from the first axial front surface (111) of the stationary ring (110).

9. Bearing system (100) according to one of the claims 1 to 8,
wherein the stationary scraper (140) comprises a further seal lip (141) for scraping off grease from the rotatable scraper (130), if the rotatable ring (120) rotates.

10. Method for scraping off grease in a bearing system (100) for a wind turbine,
wherein the bearing system (100) comprises
a stationary ring (110) which comprises a first axial front surface (111),
a rotatable ring (120) to which a hub of the wind turbine is mountable,
wherein the stationary ring (110) supports the rotatable ring (120), such that the rotatable ring (120) is rotatable with respect to the stationary ring (110),
a rotatable scraper (130) which is fixed to the rotatable ring (120),
wherein the rotatable scraper (130) abuts against the first axial front surface (111) such that by rotation of the rotatable ring (120) the rotatable scraper (130) sweeps along the first axial front surface (111) for scraping off a grease from the first axial front surface (111) of the stationary ring (110), and
a stationary scraper (140),
the method comprising
scraping off grease from the rotatable scraper (130) by the stationary scraper (140) by arranging the stationary scraper (140) and the rotatable scraper (130) with respect to each other in such a way that the rotatable scraper (130) passes the stationary scraper (140) once per revolution of the rotatable ring (120) with respect to the stationary ring (110).
